Europäisches Patentamt

European Patent Office

Office européen des brevets

(11) Publication number: **0 090 383**
**B1**

## (12) EUROPEAN PATENT SPECIFICATION

(45) Date of publication of patent specification: 23.05.90

(51) Int. Cl.⁵: **B 01 D 29/54**

(21) Application number: 83103006.9

(22) Date of filing: 25.03.83

(54) Filter element assembly replaceable mesh pack.

(30) Priority: 29.03.82 US 362804

(43) Date of publication of application:
05.10.83 Bulletin 83/40

(45) Publication of the grant of the patent:
23.05.90 Bulletin 90/21

(84) Designated Contracting States:
AT BE CH DE FR GB IT LI LU NL SE

(56) References cited:
DE-C-1 124 925
DE-U-1 639 403
GB-A-1 574 998
US-A-2 448 157
US-A-4 133 763
US-A-4 218 324

(73) Proprietor: HR TEXTRON INC.
25200 West Rye Canyon Road
Valencia, CA 91355 (US)

(72) Inventor: Seleman, Don J.
15 700 Ludlow Street
Granada Hills, CA 91344 (US)
Inventor: Honzik, Roy F.
10122 Forbes Avenue
Sepulveda, CA 91343 (US)

(74) Representative: Hansmann, Axel
Patentanwälte HANSMANN & VOGESER Albert-
Rosshaupter-Strasse 65
D-8000 München 70 (DE)

Courier Press, Leamington Spa, England.

## Description

The present invention is directed toward the large area metallic filter elements which are used to filter high viscosity materials (approximately 20 to 2,000 Pa·s (200 to 20,000 poise) at relatively high temperatures (in excess of approximately 100°C) at relatively high pressures (in excess of approximately 28 kg/cm² (400 p.s.i.) gauge differential). Prior art filters of this type traditionally include concentrically arranged dual filter media permanently affixed to appropriate support and mounting components to form the complete filter element to receive the filtrant through parallel flow paths for removing contaminants therefrom. The entire element is appropriately received within a housing or chamber through which the filtrant passes while being filtered.

In the prior art relating to such filter elements it has been customary to remove the filter element from the housing when it is no longer capable of accomplishing the desired cleansing of the filtrant and then cleaning the filter element for further use. It has been found that the life of the filter element is limited by the number of cleaning cycles the filter media is capable of withstanding. When the prior art filter media becomes no longer useful, that is, it can no longer be cleaned sufficiently to allow it to efficiently remove contaminants from the filtrant, the entire filter element is discarded. Although the filter media is no longer capable of continued efficient use the remaining components of the filter element could have additional life but for the inoperable filter media.

Prior art U.S. patent 4,218,324 issued August 19, 1980 to W. U. Hartmann et al discloses a stainless steel metallic filter element of relatively small diameter constructed in such a manner that the filter media member may be removed and cleaned and replaced for further use by slipping the filter media over the outer surface of an appropriate support member. While the structure disclosed in patent 4,218,324 operates excellently for the small size filter elements, it has been found that it is inappropriate to the large area dual filter media filter elements of the present invention.

The U.S. patent to Schneider 2,448,157 discloses a dual filter media portable filter in which the filter media is a spun glass woven knitted or otherwise fabricated mesh stretched over a pair of cylindrical perforate shells for filtering liquid contained within an open tank such as an electroplating bath. The spun glass fabric may be removed from the shells for washing or replacement. The filter element as disclosed in the Schneider patent 2,448,157 is not usable with the filtrant employed with the filter elements constructed in accordance with the present invention.

From DE—U—1 639 403 a filter arrangement for use in petrol stations with two concentrically arranged filter media which are held within annular slots is known.

Additional prior art patents known to applicants are: United States Patents 1,918,980, 3,312,349, 3,653,512, 3,750,889, 3,883,430, 3,900,401, 4,167,483 and 4,179,372.

A metallic filter element is provided for fine filtration under somewhat adverse operating conditions. The filter element may be easily disassembled for cleaning and replacement of the filter media as well as all of the component parts of the filter element. The filter element includes a pair of metal filter media concentrically disposed over a pair of support tubes with guard shield means protecting the filter media and retaining means removably securing the media on the support tubes.

It is the object of the present invention to provide a filter element fir filtering fluid material having a high viscosity at relatively high temperatures and relatively high pressures.

This object is achieved by a dual metallic filter element comprising the features of claim 1. Preferred developments of said filter element are specified in the dependent claims 2 to 9. The invention will now be described in more detail, by way of example only, with reference to the accompanying drawings, in which:

Figure 1 is a cross sectional view of a filter element constructed in accordance with the present invention;

Figure 2 is a series of Figures illustrating construction of the ends of the filter media; and

Figure 3 is a partially exploded view of the filter element of the present invention illustrative of the disassembly or assembly thereof.

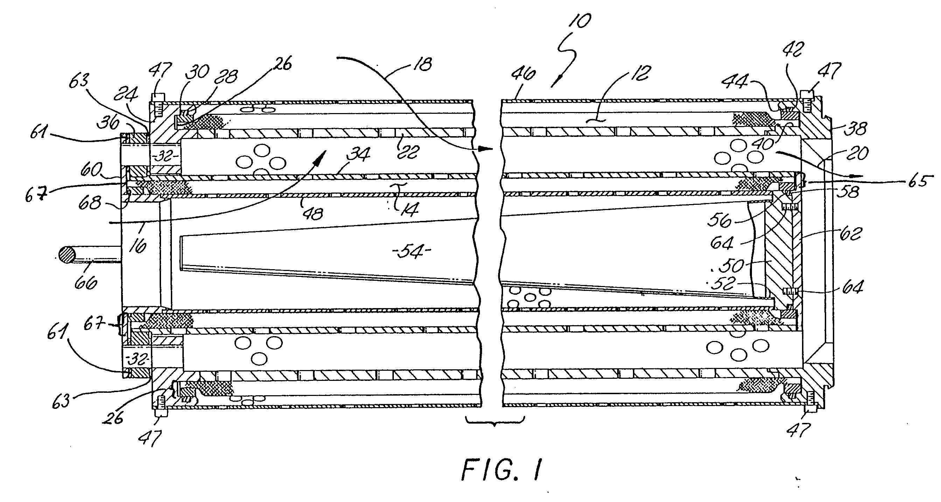

Referring now to the drawings and more particularly to Figure 1 there is illustrated a filter element 10 constructed in accordance with the present invention. The filter element 10 includes an outer filter media 12 and an inner filter media 14 appropriately retained within a supporting framework to receive a fluid filtrant in parallel flow paths through the media 12 and 14 as shown by arrows 16 and 18 to be filtered and then to pass from the element as shown by the arrow 20. The filter element, including the media 12 and 14, is constructed of corrosion resistant material such as stainless steel so as to withstand temperatures in excess of approximately 100°C and pressures in excess of approximately 28 kg/cm² (400 p.s.i.g.) differential and the framework which receives the media 12 and 14 is constructed so as to withstand the pressure drops experienced with high viscosity material (approximately 20 to 2000 Pa·s (200 to 20,000 poise)).

The outer filter media 12 rests upon a tubular outer perforate support tube 22. The support tube 22 has a fitting 24 permanently affixed thereto as by welding. The fitting 24 is annular in configuration and defines an annular slot 26 which receives one end of the outer filter media 12. The annular slot 26 defines a recess or groove 28 within which there is disposed an O-ring 30 to seal the end of the filter media to prevent leakage of the filtrant therearound. The fitting 24 defines an opening 32 therethrough for a purpose to be described below.

The inner filter media 14 rests upon an inner perforate metal support tube 34. The support tube 34 includes a flange 36 extending radially outwardly therefrom and permanently secured thereto as by welding. The flange 36 also defines an opening (unnumbered) which mates with the opening 32 in the fitting 24.

It will now be noted that the outer and inner support tubes 22 and 34, respectively, provide support for outer and inner filter media 12 and 14, respectively, to prevent collapse thereof as the fluid filtrant flows in the direction as indicated by the arrows 16 and 18.

The opposite end of the filter media 12 is supported by an outer retaining ring 38 which defines an annular slot 40 therein for receiving the opposite end of the filter media 12. The slot 40 defines a recess 42 within which there is seated a sealing O-ring 44 which cooperate with the end of the filter media 12 to prevent filtrant leakage therearound.

An outer shield or guard means 46 is supported upon the fitting 24 and the retainer 38 and is held in place by appropriate fasteners such as the cap screws 47. The outer guard 46 functions to prevent collapse of the filter media 12 in the event of back flushing of the filter element. In addition thereto, the guard 46 protects the filter media 12 from damage by foreign objects during handling thereof. It should be noted that the guard 46 is perforate to provide ample flow paths for the fluid filtrant as indicated by the arrow 18.

From Figure 1 it can be seen that the fitting 24 and the retaining ring 38 define opposed slots 26 and 40 for receiving each of the two ends of the outer filter media 12. These opposed slots in conjunction with the support tube 22 and outer guard 46 form retaining means for the outer filter media 12.

An inner guard or shield 48 is provided and is positioned adjacent the inner surface of the inner filter media 14. The inner guard functions precisely the same as does the outer guard but with respect to the inner filter media 14. In addition, the inner guard 48 is closed at one end by a plug 50 which defines a shoulder 52 to which there is permanently affixed a cone 54 to control flow of filtrant and to avoid dead spaces within the center of the element. The plug 50 defines a groove 56 within which there is positioned a sealing O-ring 58 which cooperates with one end of the inner media 14 to prevent filtrant leakage therearound. Space is provided between the circumference of the plug 50 and the inner support tube 34 to receive one end of the filter media 14. The opposite end of the filter media 14 is received in a space provided between the outer surface of the inner guard 48 and the inner surface of the inner support tube 34.

The guard 48 has a flange 60 permanently affixed thereto as by welding and which extends radially outwardly therefrom. The flange 60 also defines an opening which mates with the opening 32 in the fitting 24. As can be seen a pair of sealing gaskets 61 and 63 are received between the flanges 36 and 60 and the flange 36 and the fitting 24, respectively.

A cap 62 is secured to the plug 50 by appropriate fasteners such as the screws 64 while the flange 60 is secured to the flange 36 by similar appropriate fasteners (not shown). A handle 66 is secured to the flange 60 so that the entire filter element may be removed from the filter housing as a unit for cleaning and replacement.

As can be seen the combination of the cap 62, plug 50 and the end of the inner support tube 34 defines a slot 65 for receiving one end of the inner filter media 14 to retain it in place. The opposite end of the filter media 14 is retained within a slot 67 defined by the flange 60 and the opposed surfaces of the inner support tube 34 and guard shield 48. The slots 65 and 67 are opposed.

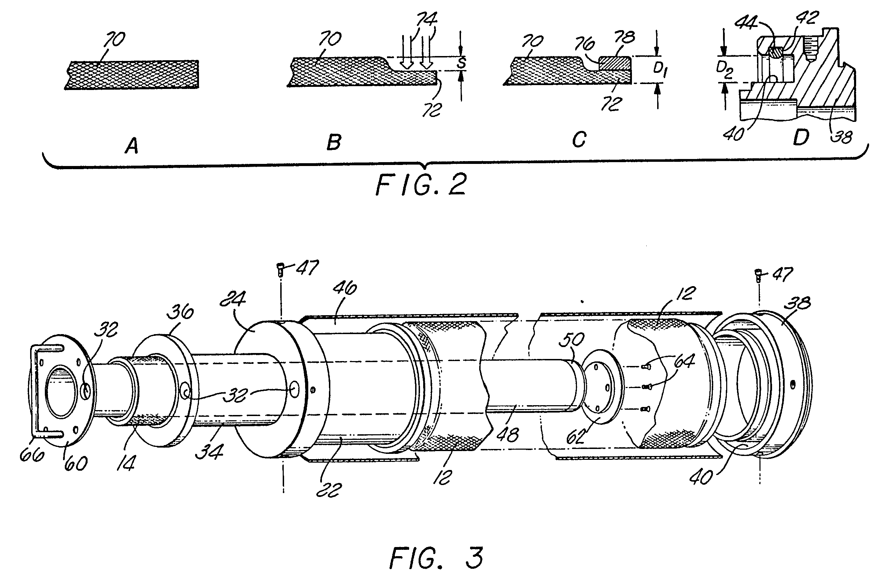

The ends of the filter media are fabricated to effect seals thereby preventing leakage of the fluid filtrant around the ends of the filter media thereby forcing all of the fluid to pass through the filter media before leaving the filter element. By reference to Figure 2 the manner of fabrication is shown. As is illustrated in Figure 2A, an appropriate filter media is segmentally shown. The filter media member includes a tubular pleated filter media 70 constructed of a plurality of randomly disposed metallic fibers which have been sintered. Such a filter media is well known in the art and may be constructed in accordance with the teachings of U.S. Patent No. 3,504,422 which is incorporated herein by reference. By way of summary only, the disclosure of said patent generally teaches that metallic fibers having a cross sectional area to provide the desired absolute filter rating for the filter media 70 are formed into an air-laid web and thereafter are processed by compression and sintering to form a felted cloth material. This material may then be placed between woven wire meshes to provide additional support and the combination thereafter pleated and formed into a circular configuration as shown and described in conjunction with Figure 1.

As is shown in Figure 2B the end 72 of the media 70 is compressed by applying pressure thereto as shown by the arrows 74. The end 72 is compressed so as to substantially be solid after the compression as compared to the porous filter media 70 prior thereto. As shown in Figure 2C, the space S formed by the compression is radially completely and longitudinally at least partially filled by a solid metal annulus 76 permanently secured to the end 72 of the filter media 70, for example, as by welding. The solid metal annulus 76 may then have its outer surface 78 machined or otherwise finished so that an appropriate dimension $D_1$ is provided for the end of the filter media including the annulus 76 and the compressed portion 72. The dimension $D_1$ is determined by the dimension within which the end of the filter will be received such, for example, as is shown in Figure 2D which is a fragmented section of the outer retaining ring 38. As is therein shown the annular slot 40 defines an opening having the dimension $D_2$. The dimension $D_1$ is substantially equal to the dimension $D_2$. Thus when the end of the filter media is inserted into the annular slot 40, a compression of the O-ring 44 occurs to a degree such that a seal is effected.

Similar dimensional consideration is provided for the other ends of the filter media so that the appropriate seals are obtained when the ends of the media are inserted into the designated slots 26 and 40 receptacles. As is shown with regard to Figure 1, the O-ring 58 will be compressed by the end of the filter media 14 while an additional O-ring 68 is provided at the opposite end for effecting a seal thereat.

Those skilled in the prior art will recognize that when the temperature of the filtrant exceeds approximately 150°C the traditional O-rings and gaskets are no longer useful. Under these circumstances the seals may be accomplished by using metal-to-metal contacts such as shown in the Hartmann et al Patent No. 4,218,324 above referenced which is incorporated herein by this reference.

By reference to Figure 3 it can now be seen that the filter element of the present invention can be readily disassembled after it has been removed from its housing. The filter element is retained within a housing (not shown) by a pair of rods (not shown) which are secured at one end of the housing and extend through the filter element and though the openings 32—32' where a pair of cap nuts secure the filter element sealably within the housing so the fluid being filtered may pass through the filter media as indicated by the arrows 16 and 18 and out as indicated by the arrow 20. By removal of the cap screws (not shown), the filter element may be removed from the housing by utilization of the handle 66.

After removal of the filter element from the housing (not shown) a new filter element may be immediately inserted in place, secured by the cap screws, the housing closed and the process flow continued to thereby have a minimum of down time for the system while the filter is being cleaned and replaced.

The removed contaminated filter element may be cleaned after being disassembled in a relatively easy and simple matter. The cap screws 47 can be removed after which the outer guard 46 is removed by sliding the same toward the left as viewed in Figure 1. Thereafter the outer retainer ring 38 is removed after which the outer filter media 12 can be removed by sliding it toward the right as viewed in Figure 1 along the support tube 22.

Thereafter the end cap 62 is removed by first removing the retaining screws 64. The additional screws are also removed from the flange 60 after which the inner guard 48 can be removed by sliding it toward the left as viewed in Figure 1. Thereafter the inner support tube 34 may be removed from the inner filter media 14.

With the components thus disassembled each may be separately cleaned without interference from the other components. After appropriate cleaning to remove all foreign matter therefrom the entire element may be reassembled by reversing the disassembly procedure above briefly described. Obviously those skilled in the art will recognize that all appropriate O-rings and gaskets are replaced upon each reassembly of the filter element.

Those skilled in the art will recognize that a large area filter element having replaceable dual filter media as well as replaceable components contained therein has been disclosed and will provide extended life for filter elements since the framework supporting the filter media may be used indefinitely with only the filter media being replaced after the same have become no longer usable. In addition thereto those skilled in the art will recognize that the framework may be used to support different types of filter media having different absolute filter ratings without the necessity of generating or providing separate framework for each absolute filter rating filter media.

**Claims**

1. A dual metallic filter element (10) for filtering fluid material having a viscosity in excess of 20 Pa·s (200 poise) at temperatures in excess of 100°C and pressures in excess of 28 kg/cm$^2$ (400 p.s.i.) and having dual replaceable spaced apart filter media (12, 14), said material being filtered by flowing through each of said media from one side thereof, the upstream side, to another side thereof, the downstream side, comprising:

(A) an outer perforate support tube (22) for a first stainless steel filter;

(B) an outer perforate tubular guard shield (46) for the first stainless steel filter;

(C) a first tubular stainless steel filter (12) disposed between said outer tube (22) and shield (46);

(D) an inner perforate support tube (34) for a second stainless steel filter;

(E) an inner perforate tubular guard shield (48) for the second stainless steel filter;

(F) a second tubular stainless steel filter (14) disposed between said inner tube (34) and shield (48);

(G) said first filter (12) being concentrically disposed outwardly relative said second filter (14) and together defining an inner tubular volume surrounded by an annular outer void volume, said volumes having adjacent first ends and adjacent second ends; and

(H) retaining means including a cap (62) and fitting means removably securing the filters (12, 14) on its respective support tubes (22, 34) and plugging said first end of said tubular volume and said second end of said annular void volume respectively, said support tubes (22, 34) being disposed opposed each other, defining said annular outer void volume, and being on the downstream side of the flow of said material through the filters.

2. A filter element as defined in claim 1 wherein each end of each of said tubular filters (12, 14) is compressed.

3. A filter element as defined in claim 2 wherein said compressed ends of said filters (12, 14) include a solid metal annulus (76) permanently affixed to each end of said filters (12, 14), each compressed end and its solid metal annulus having a predetermined cross sectional width D1.

4. A filter element as defined in claim 3 wherein said filters (12, 14) are inwardly compressed at its outer ends to be substantially solid and define a void and said solid metal annulus (76) fills at least part of the void left by said compression.

5. A filter element as defined in claim 4, which further includes compressible seal means disposed in said retaining means, said annulus (76) coacting with said seal means (30, 44, 58) to effect seals at each end of said filters (12, 14).

6. A filter element as defined in claim 5, wherein said retaining means includes means defining opposed annular slots for receiving each end of said filters (12, 14) with said attached solid metal annulus (76).

7. A filter element as defined in claim 6, wherein said opposed slots for said first filter are defined by a fitting (24) permanently secured to said outer support tube (22) at one end of said outer support tube (22) and a retainer ring (38) disposed at another end of said outer support tube (22).

8. A filter element (10) as defined in claim 7 wherein said opposed slots for said second filter (14) are defined by opposite opposed ends of said inner support tube (34) and inner guard shield (48); and which further includes a flange (60) at one end permanently secured to said inner guard shield and the cap (62) disposed at another end of said inner guard shield, each of said slots having a predetermined cross sectional width D2, D1 being substantially equal to D2.

9. A filter element as defined in claim 8, wherein said retainer ring (38) and said cap (62) are held in place by removable fasteners.

**Patentansprüche**

1. Metallisches Zweifilter-Element (10) zum Filtrieren fluiden Materials von einer 20 Pa·s (200 Poise) übersteigenden Viskosität bei 100°C übersteigenden Temperaturen und 28 kg/cm² (400 psi) übersteigenden Drücken und welches zwei auswechselbar beabstandete Filtermittel (12, 14) hat, wobei das Material bei Durchfluß durch jedes der Medien von ihrer einen Seite, der Aufstromseite, zu ihrer anderen Seite, der Rückstromseite, filtriert wird, mit

(A) einem äußeren perforierten Trägerrohr (22) für einen ersten Filter aus nichtrostendem Stahl,

(B) einen äußeren perforierten rohrförmigen Schutzschild (46) für den ersten Filter aus nichtrostendem Stahl,

(C) einem ersten zwischen dem äußeren Rohr (22) und dem Schild (46) angeordneten rohrförmigen Filter aus nichtrostendem Stahl,

(D) einem inneren perforierten Trägerrohr (34) für einen zweiten Filter aus nichtrostendem Stahl,

(E) einem inneren perforierten rohrförmigen Schutzschild (48) für den zweiten Filter aus nichtrostendem Stahl,

(F) einem zweiten zwischen dem inneren Rohr (34) und dem Schild (48) angeordneten rohrförmigen Filter aus nichtrostendem Stahl (14), wobei

(G) der erste Filter (12) konzentrisch außen befindlich bezüglich des zweiten Filters (14) angeordnet ist und zusammen ein inneres durch ein ringförmiges äußeres Hohlraumvolumen umgebenes rohrförmiges Volumen definieren, wobei die Volumina benachbarte erste Enden und benachbarte zweite Enden aufweisen, und

(H) eine Halteeinrichtung, welche eine Kappe (62) und ein Fitting zur lösbaren Feststellung der Filter (12, 14) auf ihrem entsprechenden Trägerrohr (22, 34) aufweist, und jeweils das erste Ende des rohrförmigen Volumens und das zweite Ende des ringförmigen Hohlraumvolumens abgedichtet sind, die Trägerrohr (22, 34), welche das ringförmige äußere Hohlraumvolumen definieren und einander gegenüberliegend angeordnet sind, auf der Rückstromseite der Flusses des Materials durch die Filter sind.

2. Filter-Element nach Anspruch 1, worin jedes Ende eines jeden der rohrförmigen Filter (12, 14) zusammengedrückt ist.

3. Filter-Element nach Anspruch 2, worin die zusammengedrückten Enden der Filter (12, 14) einen permanent an jedem Ende der Filter (12, 14) befestigten soliden Metallring (76) aufweisen, wobei jedes zusammengedrückte Ende und sein solider Metallring einen vorbestimmten Querschnitt D1 haben.

4. Filter-Element nach Anspruch 3, worin die Filter (12, 14) an ihren äußeren Enden einwärts zusammengedrückt sind, um in wesentlichen solid zu sein und einen Hohlraum zu definieren, und worin der solide Metallring (76) wenigstens einen Teil des durch das Zusammendrücken verbleibenden Hohlraums füllt.

5. Filter-Element nach Anspruch 4, welches weiter eine in der Halteeinrichtung angeordnete, zusammendrückbare Dichtungseinrichtung aufweist, wobei der Ring (76) mit der Dichtungseinrichtung (30, 44, 58) zusammenwirkt, um Abdichtungen an jedem Ende der Filter (12, 24) zu bewirken.

6. Filter-Element nach Anspruch 5, worin die Halteeinrichtung eine Einrichtung zum Definieren gegenüberliegender ringförmiger Vertiefungen zur Aufnahme eines jeden Endes der Filter (12, 14) mit dem angefügten soliden Metallring (76) aufweist.

7. Filter-Element nach Anspruch 6, worin die gegenüberliegenden Vertiefungen für den ersten Filter durch ein Fitting (24) definiert werden, welches permanent an dem äußeren Trägerrohr (22) an einem Ende des äußeren Trägerrohrs (22) und einem an dem anderen Ende des äußeren Trägerrohrs (22) angeordneten Halterring (38) befestigt ist.

8. Filter-Element (10) nach Anspruch 7, worin die gegenüberliegenden Vertiefungen für den zweiten Filter (14) durch die entgegengesetzt gegenüberliegenden Enden des inneren Trägerrohrs (34) und des inneren Schutzschilds (48) definiert werden, und welches weiter einen an dem einen Ende permanent an den inneren Schutzschild und der an dem anderen Ende des inneren Schutzschilds angeordneten Kappe (62) befestigten Flansch (60) aufweist, wobei jede der Vertiefungen eine vorbestimmte Querschnittsbereite D2 hat, wobei D1 im wesentlichen gleich D2 ist.

9. Filter element nach Anspruch 8, worin der Halterring (38) und die Kappe (62) durch abnehmbare Befestigungselemente festgehalten werden.

**Revendications**

1. Elément filtrant métallique double (10) pour filtrer un matériau fluide ayant une viscosité inférieure à 20 Pa·s (200 poises) à une température supérieure à 100°C et des pressions dépassant 28 kg/cm² et ayant des milieux filtrants séparées, espacés, remplaçables, doubles (12, 14), le matériau étant filtré par écoulement dans chacun des milieux à partir d'un côté de ceux-ci, côté avant, jusqu'à l'autre côté, côté aval, comprenant:

(A) un tube de support extérieur, perforé (22) pour un premier filtre en acier inoxydable;

(B) un écran de protection extérieur, perforé, tubulaire (46) pour le premier filtre en acier inoxydable;

(C) un premier filtre tubulaire (12) en acier inoxydable disposé entre le tube extérieur (22) et l'écran (46);

(D) un tube de support intérieur, perforé (34) pour un second filtre en acier inoxydable;

(E) un écran de protection intérieur perforé tubulaire (48) pour le second filtre en acier inoxydable;

(F) un second filtre tubulaire (14) en acier inoxydable disposé entre le tube intérieur (34) et l'écran (48);

(G) le premier filtre (12) étant disposé concentriquement à l'extérieur du second filtre (14) et définissant avec lui un volume tubulaire intérieur entouré par un volume annulaire extérieur vide; lesdits volumes ayant des premières extrémités adjacentes et des secondes extrémités adjacentes; et

(H) un moyen de retenue comportant un chapeau (62) et un moyen de montage fixant de manière amovible les filtres (12, 14) sur leur tube de support respectif (22, 24) et bouchant la première extrémité du volume tubulaire et la seconde extrémité du volume annulaire vide respectivement, les tubes de support (22, 34) étant disposés en étant opposés l'un à l'autre, définissant le volume annulaire extérieur vide et se trouvant en aval de l'écoulement du matériau traversant les filtres.

2. Elément filtrant selon la revendication 1, dans lequel chaque extrémité de chacun des filtres tubulaires (12, 14) est comprimé.

3. Elément filtrant selon la revendication 2, dans lequel les extrémités des filtres (12, 14) comportent un anneau métallique solide (76) fixé en permanence à chaque extrémité des filtres (12, 14), chaque extrémité comprimée et son anneau métallique solide ayant une largeur prédéterminée D1 dans une section transversale.

4. Elément filtrant selon la revendication 3, dans lequel les filtres (12, 14) sont comprimés vers l'intérieur à leurs extrémités extérieures pour être sensiblement solides et définir un vide et l'anneau métallique solide (76) remplit au moins une partie du vide laissé par la compression.

5. Elément filtrant selon la revendication 4, qui comprend en outre un moyen de joint compressible disposé dans le moyen de retenue, l'anneau (76) agissant mutuellement avec le moyen de joint (30, 44, 58) pour effectuer des joints à chaque extrémité des filtres (12, 14).

6. Elément filtrant selon la revendication 5, dans lequel le moyen de retenue comporte un moyen définissant des fentes annulaires opposées pour recevoir chaque extrémité des filtres (12, 14) avec l'anneau métallique solide attaché (76).

7. Elément filtrant selon la revendication 6, dans lequel les fentes opposées pour le premier filtre sont définies par un raccord (24) fixé en permanence au tube de support extérieur (22) à une extrémité du tube de support extérieur (22) et une bague de retenue (38) disposée à l'autre extrémité du tube de support extérieur (22).

8. Elément filtrant (10) selon la revendication 7, dans lequel les fentes opposées pour le second filtre (14) sont définies par les extrémités opposées du tube de support intérieur (34) et l'écran intérieur de protection (48); et qui comporte en outre un flasque (60) à une extrémité fixé en permanence à l'écran intérieur de protection et au chapeau (62) disposé à l'autre extrémité de l'écran intérieur de protection, chacune des fentes ayant une largeur prédéterminée D2 de la section transversale, D1 étant sensiblement égal à D2.

9. Elément filtrant selon la revendication 8, dans lequel la bague de retenue (38) et le chapeau (62) sont maintenus en place par des attaches amovibles.

FIG. I

FIG. 2

FIG. 3